# EUROPEAN PATENT APPLICATION

(11) **EP 1 096 184 A2**
(43) Date of publication of application: **02.05.2001**
(21) Application number: 00117983.7
(22) Date of filing: 22.08.2000
(51) Int. Cl.: F16J 15/32

(54) **Sealing between two rotatable elements, for example a shaft and a hub**

(30) Priority: 28.10.1999 SE 9903883
(71) Applicant: Forsheda AB, S-330 12 Forsheda (SE)
(72) Inventor: Josefsson, Mikael, 33012 Forsheda (SE); Bennefors, Christer, 33010 Bredaryd (SE); Lindgren, Jonas, 33015 Bor (SE)
(74) Representative: Linde, Leif

(57) **Abstract**

A sealing device of the type cassette seal for sealing a space between for example a shaft (40) and a hub (42) comprises a housing (4) having a sleeve-shaped section (30) connectable with the hub (42) and an annular section (32) angled from the sleeve-shaped section (30) and directed towards the shaft (40). The sealing device further comprises a cap (6) having a sleeve-shaped section (8) which is connectable with the shaft (40) and a section (10) which is angled from the sleeve-shaped section and is directed towards the hub (42). The annular section (10) of the cap (6) supports a sealing lip (14) engaging the sleeve-shaped section (30) of the housing (4). The cap (6) has at its sleeve-shaped section (8) an edge portion (12) which is foldable in the direction against the hub (42) over the edge portion of the angled annular section (32) of the housing (4) for locking together the housing and the cap in the axial direction. The foldable edge portion (12) of the cap supports a sealing lip (24) which subsequently to the folding of the fold edge portion (12) slidably engages the annular section (32) of the housing (4).

## Description

The present invention relates to a sealing device of the type cassette seal for sealing a space between two elements which are rotatable in relation to each other, for example a shaft and a hub.

The sealing device according to the invention is mainly intended for rotatable wheel hubs and comprises a housing comprising a sleeve-shaped section which is connectable with the first one of the elements which are rotatable to each other and an annular section angled in relation to the sleeve-shaped section and directed towards the second element. The sealing device comprises also a cap having a sleeve-shaped section which is connectable with the second element and has an annular section directed towards the first element, said annular section supporting a sealing lip slidably engaging the sleeve-shaped section of the housing. At its sleeve-shaped section the cap has an edge portion which is foldable in the direction of the first element over the edge portion of the angular, annular section of the housing in order to lock together the housing and the cap of the sealing device in the axial direction.

The object of the invention is to provide an improved sealing device of the type cassette seal of said kind in which the sealing device is prepared to comply with high requirements for sealing devices for machines working under extremely wet and dirty circumstances. The sealing device is primarily intended for rotatable wheel hubs and shall have the capacity to prevent that oil leaks out from the hub at the same time as the sealing device shall prevent that water and dirt force its way into the hub.

In order to comply with this object the sealing device according to the invention is characterized in that the foldable edge portion of the cap supports a sealing lip which subsequently to the folding of the foldable edge portion slidably engages the annular section of the housing.

Preferably the cap supports two sealing lips which are positioned axially beside each other and slidably engage the sleeve-shaped section of the housing, the sealing lip being preferably spring-loaded into engagement with the sleeve-shaped section of the housing.

It is also suitable that the annular section of the cap supports a sealing lip slidably engaging the annular section of the housing in order to make sure that no water and no dirt force its way into the hub, the sealing lip supported by the foldable edge portion of the cap and the sealing lip supported by the annular section of the cap engage with surfaces of the annular section of the housing, which surfaces are turned from each other.

In order to define the positions of the two elements of the sealing device in relation to each other the foldable edge portion of the cap has a wearing shoulder facing the annular section of the housing and preferably consisting of elastic material.

It is suitable that the angular, annular section of the housing has adjacent the sleeve-shaped section of the housing a portion which forms a right angle therewith, after that has an oblique portion extending towards the angular, annular section of the cap and has an edge portion which forms a right angle with the sleeve-shaped section of the housing. It is thereby suitable that the sealing lip supported by the foldable edge portion of the cap slidably engages the oblique portion of the angular, annular section of the housing and that the sealing lip supported by the annular section of the cap slidably engages the edge portion of the angular, annular section of the housing.

Preferably the sleeve of the cap is connected with one of the elements which are rotatable in relation to each other by means of elastic material provided between the sleeve of the cap and said element, said material being preferably provided with rims.

It is also suitable that the cap is connected with a non-rotating shaft and that the housing is connected with a hub enclosing the shaft and being rotatable. This means that the sealing lips of the cap are stationary which has a positive influence on the function of the sealing lips.

An embodiment of the invention shall in the following be described with reference to the accompanying drawings.
Fig. 1 is an axial section of a cassette seal according to the invention consisting of two elements, the section being shown prior to the connection of the two elements with each other.
Fig. 2 is an axial section of the cassette seal subsequently to the connection of the two elements of the cassette seal with each other.
Fig. 3 is an axial section of the cassette seal mounted in order to seal a space between a stationary shaft and a rotatable hub.

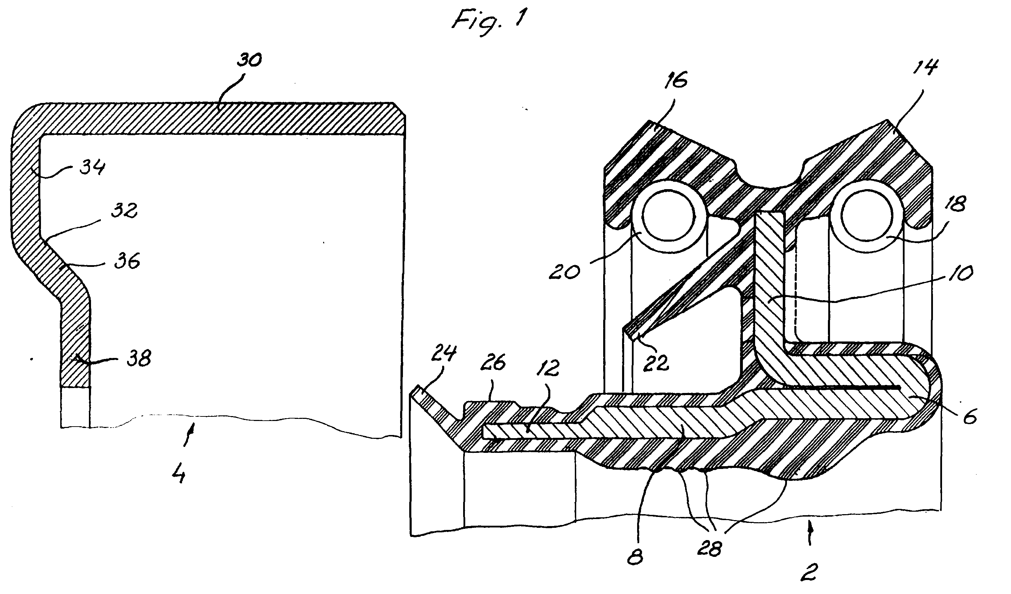

The cassette seal shown in the drawings is intended for sealing a space between a stationary shaft and a hub rotating around the shaft. The cassette seal consists of two elements 2 and 4, the element 2 being intended to be positioned on the stationary shaft and the element 4 being intended to be positioned in the hub. Fig. 1 shows the two elements 2 and 4 of the cassette seal prior to the mounting of the cassette seal. The element 2 has an annular hub 6 consisting of metal and having a sleeve-shaped section 8 and an annular outwardly directed section 10 forming a right angle with the sleeve-shaped section. The sleeve-shaped section 8 has an edge portion 12 of reduced thickness, said edge portion 12 being foldable to a position in which it is parallel with the annular section 10.

The cap 6 is enclosed by rubber material which is vulcanized to the cap and at the outer periphery of the element 4 forms a sealing lip 14 for sealing against oil and axially beside this sealing lip has a sealing lip 16 for sealing against water. The sealing lips 14 and 16 are loaded by means of screw springs 18 and 20 striving to displace the sealing lips 14 and 16 radially outwards.

The rubber material supported by the cap 6 forms at the side of the annular section 10 of the cap 6 an obliquely sidewards directed sealing lip 22 having the object of preventing that dust, dirt and water penetrate into the seal.

At the edge portion of the foldable part 12 of the cap section the rubber material forms a further sealing lip 24 also having the object of preventing that dust, dirt and water penetrate into the seal. At the side of the foldable part 12 the rubber material forms in connection with the sealing lip 24 a wearing shoulder 26 having the object of engaging the element 4 of the cassette seal subsequently to the folding of the foldable portion 12 in order to position the elements 2 and 4 in relation to each other.

At its radially inner surface the sleeve-shaped section 8 of the element 2 has a layer of rubber material which is formed with annular rims 28 having the object of securing the fixing of the element 2 to the shaft.

The element 4 of the cassette seal is constituted by metal and has a sleeve-shaped section 30 which is adapted to be fixed in the rotating wheel hub by means of gripping strength. An inwardly directed annular section 32 is connected with the sleeve-shaped section 30 and has adjacent the sleeve-shaped section 30 a portion 34 perpendicular thereto and has then an obliquely inwardly directed portion 36 and forms finally an inner edge portion 38 which is parallel with the portion 34 and thus constitutes a right angle in relation to the sleeve-shaped section 30.

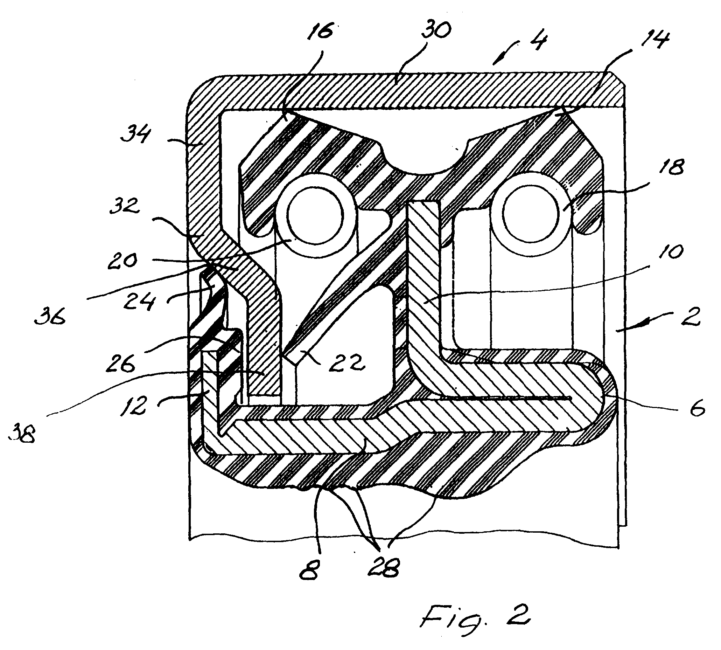

In fig. 2 the cassette seal according to the invention is shown in a mounted position in which the elements 2 and 4 of the cassette seal cooperate with each other while sliding against each other. The foldable portion 12 of the sleeve-shaped section 8 of the element 2 is folded 90° in relation to the rest of the sleeve-shaped section 8 and extends outwardly over the edge portion 38 of the annular section 32 of the element 4. The sealing lip 24 positioned on the foldable portion 12 engages with the outer surface of the oblique portion 36 of the annular section 32. The wearing shoulder 26 is at the same time turned towards the edge portion 38 of the annular section 32 of the element 4 in order to define the positions of the elements 2 and 4 in relation to each other.

The sealing lip 22 engages the inner surface of the edge portion 38 of the annular section 32 of the element 4, and the sealing lips 22 and 24 have the object of preventing that dirt, dust and water penetrates into the seal from outside. The sealing lips 14 and 16 engage the inner surface of the sleeve-shaped section 30 of the element 4 and are forced against this surface by means of the screw springs 18 and 20. The sealing lip 16 has the object of preventing water from entering the seal and the bearing positioned inside the seal between the shaft and the hub, while the sealing lip 14 constitutes the oil seal of the cassette seal and thus constitutes the main sealing lip of the cassette seal.

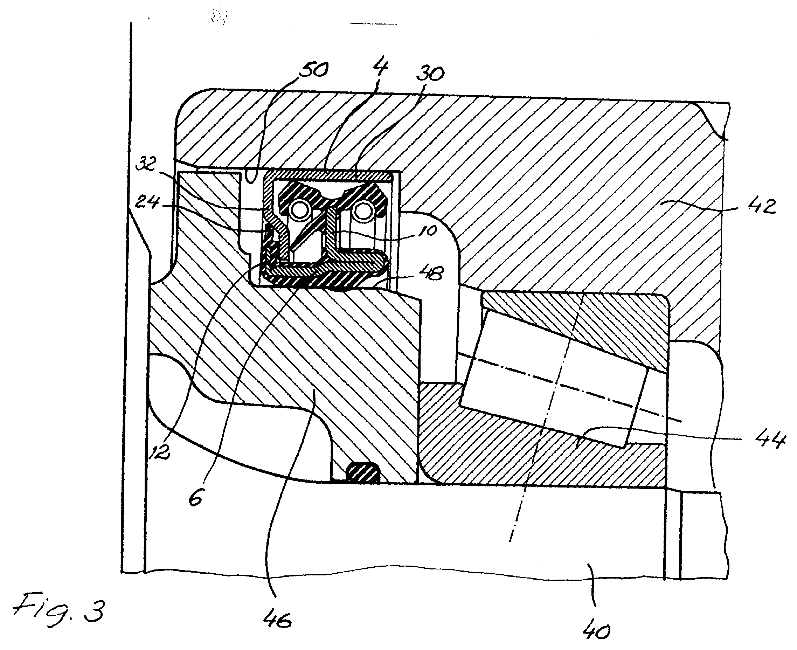

In fig. 3 the cassette seal according to the invention is shown mounted between a stationary shaft 40 and a rotatable hub 42. A roller bearing 44 is positioned between the shaft 40 and the hub 42. The shaft 40 supports an element 46 which is firmly connected with the shaft, and the cassette seal according to the invention is positioned between a cylindrical surface 48 on the element 46 and a cylindrical surface 50 in the hub 42. The element 4 of the cassette seal is firmly connected with the surface 50 by the fact that the sleeve-shaped section 30 of the element 4 is by means of gripping strength connected with the surface 50. The element 2 is connected with the element 46 connected with the shaft 40 by the fact that the annular rims 28 firmly engage the surface 48. Thus, the element 2 is firmly connected with the stationary shaft 40 while the element 4 is connected with the hub 42 so as to rotate therewith.

The cassette seal according to the invention is intended to be used in machines working under extremeley wet and dirty circumstances, and the sealing lip 24 constitutes an efficient bar preventing that dirt, dust and water penetrate into the cassette seal and prevent or decrease its function. The further sealing lips 22 and 16 constitute a further security against penetrating dirt, dust and water, while the sealing lip 14 as previously mentioned prevents oil from penetrating out from the space inside the cassette seal. The outwardly folded portion 12 and the wearing shoulder 26 secure at all circumstances a correct mutual position between the elements 2 and 4 of the cassette seal which in turn provides for a correct function of the sealing lips 14, 16, 22 and 24 of the cassette seal.

The invention can be modified with the scope of the following claims.

## Claims

1. A sealing device for sealing a space between two elements which are rotatable in relation to each other, for example a shaft (40) and a hub (42), comprising a housing (4) having a sleeve-shaped section (30) which is connectable with one of the elements (42) and an annular section (32) angled from the sleeve-shaped section and directed towards the other element and further comprising a cap (6) with a sleeve-shaped section (8) which is connectable with the other element (40) and an annular section (10) angled from the sleeve-shaped section (8) and directed towards the first element, said annular section (10) supporting at least one sealing lip (14; 16) which slidably contacts the sleeve-shaped section of the housing, the cap having at its sleeve-shaped section (8) an edge portion (12) which is foldable in the direction towards the first element (40) over the edge portion of the angled, annular section (32) of the housing (4) in order to lock the housing and the cap together in the axial direction, **characterised** in that the foldable edge portion (12) of the cap (6) supports a sealing lip (24) which subsequently to the folding of the foldable edge portion (12) slidably engages the annular section (32) of the housing.

2. A sealing device as claimed in claim 1, **characterized** in that the cap (6) supports two sealing lips (14 and 16) which are positioned axially beside each other and slidably engage the sleeve-shaped section (30) of the housing.

3. A sealing device as claimed in claim 1, **characterized** in that the sealing lip (14) which slidably engages the sleeve-shaped section of the housing is spring-loaded (18) into engagement with the sleeve-shaped section (30) of the housing.

4. A sealing device as claimed in claim 2, **characterized** in that the two sealing lips (14 and 16) slidably engaging the sleeve-shaped section (30) of the housing are spring-loaded (18 and 20) into engagement with the sleeve-shaped section (30) of the housing.

5. A sealing device as claimed in any of the preceding claims, **characterized** in that the annular section (10) of the cap (6) supports a sealing lip (22) slidably engaging the annular section (32) of the housing.

6. A sealing device as claimed in claim 5, **characterized** in that the sealing lip (24) supported by the foldable edge portion (12) of the cap (6) and the sealing lip (22) supported by the annular section (10) of the cap (6) engage surfaces of the annular section (32) of the housing which surfaces are turned from each other.

7. A sealing device as claimed in any of the preceding claims, **characterized** in that the foldable edge portion (12) of the cap (6) has a wearing shoulder (26) which is turned towards the annular section of the housing and preferably consists of elastic material.

8. A sealing device as claimed in any of the preceding claims, **characterized** in that the angular, annular section (32) of the housing (4) adjacent the sleeve-shaped section (30) of the housing has a portion (34) forming a right angle therewith, thereupon has an obliquely extending portion (36) extending towards the angled annular section (10) of the cap (6) and has an edge portion (38) forming a right angle with the sleeve-shaped section (30) of the housing.

9. A sealing device as claimed in claim 1, 5 and 8, **characterized** in that the sealing lip (24) supported by the foldable edge portion (12) of the cap slidably engages the obliquely extending portion (36) of the angular, annular section (32) of the housing (4) and that the sealing lip (22) supported by the annular section (10) of the cap (6) slidably engages the edge portion (38) of the angular, annular section (32) of the housing.

10. A sealing device as claimed in claim 7 and 8, **characterized** in that the wearing shoulder (26) is turned against the edge portion (38) of the angular, annular section (32) of the housing (4).

11. A sealing device as claimed in any of the preceding claims,**characterized** in that the sleeve-shaped portion (8) of the cap (6) is connected with the other element (40) by means of an elastic material which is positioned between the sleeve-shaped portion of the cap and the other element, the elastic material being preferably provided with rims (28).

12. A sealing device as claimed in any of the preceding claims,**characterized** in that the cap (6) and the sealing lips (14, 16 , 22 and 24) supported thereby are connected with a stationary shaft (40) and that the housing (4) is connected with a rotatable hub (42) enclosing the shaft.
